(19) Europäisches Patentamt
European Patent Office
Office européen des brevets

(11) **EP 2 162 336 B1**

(12) **FASCICULE DE BREVET EUROPEEN**

(45) Date de publication et mention de la délivrance du brevet:
**29.03.2017 Bulletin 2017/13**

(21) Numéro de dépôt: **08805679.1**

(22) Date de dépôt: **22.04.2008**

(51) Int Cl.:
**B60W 30/188** *(2012.01)*

(86) Numéro de dépôt international:
**PCT/FR2008/050721**

(87) Numéro de publication internationale:
**WO 2009/007553 (15.01.2009 Gazette 2009/03)**

(54) **PROCEDE D'ASSISTANCE AUX MANOEUVRES EN COTE**

**AUFWÄRTSSTARTHILFEVERFAHREN**

**METHOD PROVIDING ASSISTANCE WITH HILL STARTS**

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **06.07.2007 FR 0756319**

(43) Date de publication de la demande:
**17.03.2010 Bulletin 2010/11**

(73) Titulaire: **Renault S.A.S.**
**92100 Boulogne-Billancourt (FR)**

(72) Inventeurs:
• **DESFRICHES, Christophe**
**F-27120 Pacy-sur-eure (FR)**
• **MONTI, Alessandro**
**F-92250 La Garenne Colombes (FR)**
• **POTHIN, Richard**
**F-78760 Jouars-pontchartrain (FR)**

(56) Documents cités:
**EP-A- 1 327 566        WO-A-2004/067311**
**DE-A1- 10 314 998        FR-A- 2 858 032**
**US-A1- 2005 029 865**

**Description**

La présente invention concerne un procédé d'assistance aux manoeuvres en côte pour un véhicule.

Il concerne plus particulièrement un procédé d'aide au démarrage en côte pour un véhicule automobile, à boîte de vitesse manuelle ou automatique.

Sur certains véhicules, les constructeurs automobiles proposent un Frein de Stationnement Automatique.

Ce Frein de Stationnement Automatique doit apporter une prestation valorisable par le client, en raison de son coût relativement élevé par rapport à la solution du Frein de Stationnement traditionnel.

Pour valoriser ce système, des constructeurs ont donc décidé d'y associer une fonction d'assistance aux manoeuvres en côte, et notamment d'assistance au démarrage en côte (ou décollage), dont le principe est de relâcher les freins sur les roues non motrices dès que le couple transmis par le moteur aux roues motrices est suffisant pour compenser l'effet de la pente de la côte.

On connaît déjà de tels dispositifs.

Le document GB 2 376 990 propose dans cette optique un module de commande d'un dispositif de Frein de Stationnement Automatique pour un véhicule automobile comportant une boîte de vitesse manuelle, qui relâche la force exercée sur le frein de stationnement lorsqu'il reçoit des signaux lui indiquant, d'une part, un déplacement positif de la pédale d'accélérateur, et d'autre part, que la position de la pédale d'embrayage a atteint son point de léchage. L'instant où le dispositif relâche le frein dépend également de la vitesse d'enfoncement de la pédale d'embrayage, du rapport de vitesses engagé et de la pente dans laquelle se trouve l'usager du véhicule.

Ce dispositif a l'inconvénient d'être sensible au tangage de la caisse à l'arrêt, dû, par exemple, aux mouvements des passagers ou au tangage du véhicule lors du décollage.

En effet, avant le desserrage des freins, le véhicule a tendance à se cambrer, les roues restant immobiles tant que leur mouvement est empêché par le Frein, malgré le couple qui leur est appliqué. Une conséquence néfaste est un décollage tardif du véhicule, puisque le couple transmis à l'embrayage calculé est faussé par les données transmises par le capteur de pente.

Pour éviter ce phénomène, un filtre passe-bas peut par exemple être introduit pour filtrer le bruit et les composantes à haute fréquence du capteur. Cependant ceci n'est pas suffisant si l'estimation du couple transmis n'est pas précise.

Le document FR 2 858 032 décrit un procédé d'assistance aux manoeuvres en côte selon le préambule de la revendication 1.

Un objectif de l'invention est de pallier à ces inconvénients de la technique antérieure, en proposant un procédé d'assistance aux manoeuvres en côte qui soit insensible au tangage de la caisse du véhicule.

Un autre objectif de l'invention est de proposer un procédé d'assistance aux manoeuvres en côte applicable aux véhicules munis d'une boîte de vitesses manuelle ou automatique.

Pour cela, l'invention propose un procédé d'assistance aux manoeuvres en côte pour un véhicule comportant un groupe motopropulseur connecté aux roues motrices au moyen d'un embrayage et un Frein de Stationnement Automatique,

caractérisé en ce qu'il comprend une étape consistant à générer une instruction de mise en mémoire de la caractéristique de la pente qui correspond à un état dans lequel on estime que l'usager et le véhicule sont prêts à décoller, à partir de conditions que doivent remplir des paramètres physiques déterminés du véhicule.

- les conditions que doivent remplir les paramètres déterminés du véhicule sont que simultanément :

  ◦ la vitesse du véhicule doit être inférieure à une vitesse minimum définie, depuis un temps supérieur à un temps d'arrêt défini,
  ◦ un rapport de vitesses doit être engagée,
  ◦ la pédale d'accélérateur doit être enfoncée jusqu'à une position ($\theta_{acc}$) inférieure à une position seuil définie, et
  ◦ la vitesse de rotation angulaire du groupe motopropulseur doit être supérieure à une vitesse de rotation angulaire minimum.

Certains aspects préférés mais non limitatifs du procédé selon l'invention sont les suivants:

- les conditions sont remplies lorsqu'en outre la pédale d'embrayage est enfoncée jusqu'à une position supérieure à une certaine position seuil,
- le desserrage des freins n'est mis en oeuvre que si l'étape l'instruction de mise en mémoire de la caractéristique de la pente est générée,
- le desserrage des freins n'est mis en oeuvre que lorsque le couple transmis à l'embrayage atteint un couple transmis seuil dit de décollage,

- le couple transmis de décollage est estimé ou calculé en fonction de la caractéristique de la pente enregistrée,
- le couple seuil de décollage vaut:

  ◦ 0 si la caractéristique de la pente enregistrée est positive ou nulle et que la marche arrière est engagée, ou si la pente enregistrée est négative ou nulle et que la marche avant est engagée,
  ◦ $m.g.sin(\theta_{pente}).r(b).\rho_{roues}$, si la caractéristique de la pente enregistrée est strictement positive et que la marche avant est engagée, ou si la pente enregistrée est strictement négative et que la marche arrière est engagée, où

    - $m$ est la masse du véhicule,
    - $g$ est la gravité,
    - $\theta_{pente}$ est la caractéristique de la pente,
    - $r(b)$ est le rapport de boîte engagé, correspondant à la position b du levier de vitesse,
    - $\rho_{roues}$ est le rayon sous charge des roues du véhicule,

- la position seuil de la pédale d'accélération est déterminée grâce à une cartographie de la pédale d'accélérateur.

Selon un deuxième aspect de l'invention, on propose un dispositif d'assistance aux manoeuvres en côte pour un véhicule automobile comportant un groupe motopropulseur connecté aux roues motrices au moyen d'un embrayage, le dispositif comprenant un Frein de Stationnement Automatique, des moyens de commande de desserrage des freins, un capteur de pente, des moyens pour déterminer la vitesse du véhicule, des moyens pour détecter et déterminer une vitesse engagée par la boîte de vitesses, des moyens pour déterminer la position de la pédale d'accélérateur, le cas échéant, des moyens pour déterminer la position de la pédale d'embrayage, et un calculateur, caractérisé en ce que lesdits moyens permettent de mettre en oeuvre un procédé d'assistance aux manoeuvres en côte selon l'invention.

L'invention propose également un véhicule mettant en oeuvre un dispositif d'assistance aux manoeuvres en côte selon l'invention.

D'autres caractéristiques, buts et avantages de la présente invention apparaîtront à la lecture de la description détaillée qui va suivre, au regard des dessins annexés, donnés à titre d'exemples non limitatifs et sur lesquels :

- La figure 1 présente l'architecture fonctionnelle d'un véhicule équipé du dispositif selon l'invention,
- La figure 2 illustre le principe de fonctionnement de l'automate qui estime le couple transmis aux roues d'un véhicule ayant une boîte manuelle, mis en oeuvre dans l'invention,
- La figure 3 présente l'automate utilisé pour détecter la situation dans laquelle le véhicule et l'usager sont prêts au décollage,
- La figure 4 présente un schéma de principe du procédé d'aide au démarrage en côte selon l'invention.

Un véhicule équipé d'un dispositif d'assistance au démarrage en côte selon l'invention comprend un groupe motopropulseur, un Frein de Stationnement Automatique 5, un bus 4, sur lequel transitent des signaux provenant du reste du véhicule 6, et un calculateur de contrôle du groupe motopropulseur.

Le bus 4 est de préférence un bus de la norme CAN™ (Control Area Network, c'est-à-dire réseau de zone de commande).

Le groupe motopropulseur est composé d'un moteur thermique couplé à des roues motrices par un dispositif de transmission comportant une boîte de vitesse et un embrayage, qui peuvent être commandés par l'usager (dans le cas des véhicules à boîtes manuelles) ou par un automatisme (dans le cas d'un véhicule équipé d'une boîte automatique).

En variante, le groupe motopropulseur peut comporter une ou plusieurs machines électriques, avec ou sans moteur thermique.

Le dispositif d'assistance au démarrage en côte coopère avec un calculateur 1 de contrôle du Frein de Stationnement Automatique 5, qui est également connecté au bus 4.

Le calculateur 1 est équipé, ainsi qu'il est connu, d'un moyen pour produire des ordres de serrage et de desserrage du Frein de Stationnement Automatique 5, lesdits ordres du Frein 5 étant générés sur une ligne de connexion au Frein de Stationnement Automatique 5 proprement dit. Le cas échéant, le calculateur 1 est également équipé d'un moyen pour transmettre au bus 4 des informations d'état du Frein de Stationnement Automatique 5.

Le calculateur 1 de contrôle du Frein de Stationnement Automatique 5 est connecté par une ligne convenable à un capteur de pente 2. Dans d'autre formes de réalisation, si une information sur l'inclinaison de la pente est disponible sur le bus 4, le capteur 2 est remplacé par un moyen équivalent qui prélève cette information sur le flux de données transitant par le bus 4.

Lorsque le véhicule se trouve arrêté dans une pente, le capteur de pente 2 délivre un signal représentatif de l'inclinaison de la pente (que l'on désignera également par l'expression caractéristique de la pente) dans laquelle est arrêté le véhicule.

Lorsque le calculateur 1 de contrôle du Frein de Stationnement Automatique 5 produit un ordre de serrage, les parties mobiles des freins viennent serrer les disques de sorte que le Frein de Stationnement Automatique 5 soit serré.

Inversement, lorsque le calculateur 1 de contrôle du Frein de Stationnement Automatique 5 produit un ordre de desserrage du Frein de Stationnement Automatique 5, les parties mobiles des freins sont relâchées.

Par ailleurs, en situation de démarrage (que ce soit en côte ou à plat), le groupe motopropulseur du véhicule produit un couple qui est ou non transmis aux roues, selon que l'embrayage est actif ou non, et selon une fraction qui dépend de la position de l'embrayage.

Ainsi, comme on le verra par la suite, le principe de l'invention consiste à déterminer une condition de desserrage du Frein de Stationnement Automatique 5, fonction notamment de la caractéristique de la pente, mesurée lorsque l'usager et le véhicule sont prêts à décoller, et du couple $C_T$ transmis à l'embrayage. Cette condition est déterminée de sorte que le véhicule se trouve en situation de décollage dès qu'un certain seuil est dépassé, où l'effet de pente est équilibré par le couple moteur.

Pour décoller, un véhicule stationné dans une pente doit vaincre l'effet de pente, dû à la force d'attraction de la terre.

Cet effet est fonction de la caractéristique de la pente et de la masse du véhicule, et vaut

$$m.g.sin(\theta_{pente})$$

où

- $m$ est la masse du véhicule,
- $g$ est la gravité,
- $\theta_{pente}$ est la caractéristique de la pente.

Le couple minimum $C_{T\_seuil}$ qu'il faut transmettre à l'embrayage, par l'intermédiaire de la chaîne cinématique de la roue, pour permettre au véhicule de décoller (c'est-à-dire de démarrer dans la pente), doit donc être au moins égal à

$$C_{T\_seuil} = m.g.sin(\theta_{pente}).r(b).\rho_{roues}$$

où • $r(b)$ est le rapport de boîte engagé, correspondant à la position b du levier de vitesse,

- $\rho_{roues}$ est le rayon sous charge des roues du véhicule.

Ce couple $C_{T\_seuil}$ est le couple seuil de décollage.

La stratégie que propose l'invention est fondée sur l'utilisation de cette relation.

En particulier, elle consiste à relâcher le Frein de Stationnement Automatique 5, en phase de démarrage à l'arrêt, lorsque le couple transmis $C_T$ à l'embrayage est supérieur au couple seuil $C_{T\_seuil}$ de décollage.

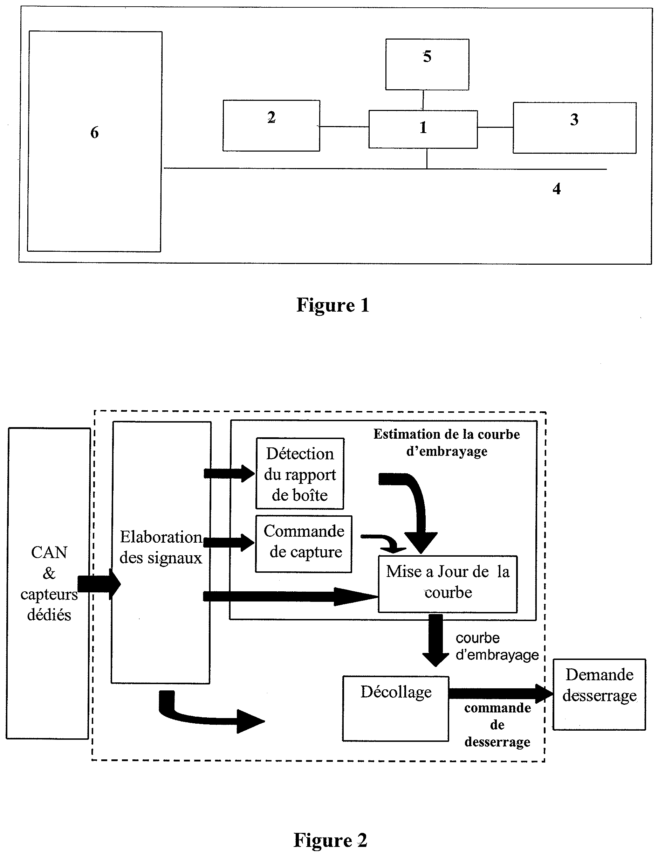

Pour les boîtes de vitesse manuelles, le couple transmis $C_T$ est estimé par un automate tel que celui décrit par la demande de brevet française FR 2 828 450 (illustré par la figure 2 annexée, pour une boîte manuelle, et que nous ne décrirons pas davantage dans la suite de la description), tandis que pour les boîtes de vitesse Automatique et/ou robotisées, il est calculé puis transmis par un convertisseur de couple, selon des techniques connues.

Nous allons à présent décrire le principe de fonctionnement de l'algorithme de décollage du procédé de l'invention.

L'algorithme exploite l'estimation ou le calcul du couple transmis $C_T$, et interprète la volonté du conducteur.

Lors du décollage, le véhicule a tendance à se cambrer, ce qui augmente l'information fournie par le capteur sur la caractéristique de la pente, et, en conséquence, augmente l'estimation du couple seuil $C_{T\_seuil}$ de décollage.

On détecte donc le moment où le véhicule et son usager sont prêts à décoller, et on « gèle » la caractéristique de pente correspondant à cet instant.

Le gel de la caractéristique est la mise en mémoire par des moyens de stockage de la valeur de la caractéristique $\theta_{pente}$ de la pente correspondant à cet instant.

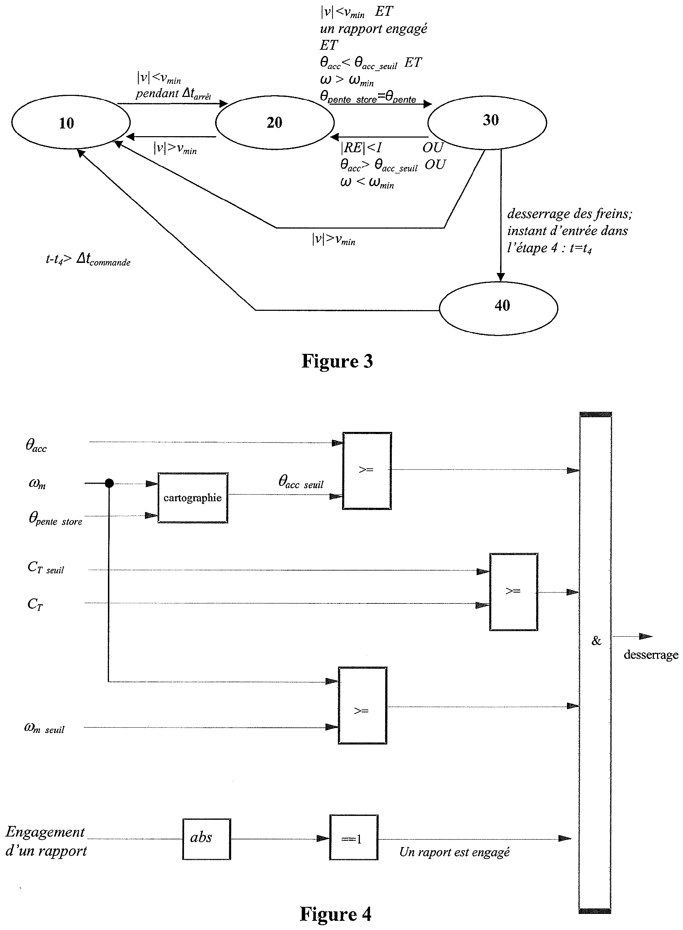

La détection dudit instant est réalisée à l'aide de l'automate illustré en figure 3, qui peut prendre quatre états distincts et successifs.

Dans un premier état 10, la vitesse v du véhicule est supérieure à une vitesse minimum définie $v_{min}$. L'automate

considère alors que le véhicule circule.

Dans un deuxième état 20, la vitesse v du véhicule est inférieure à la vitesse minimum $v_{min}$ pendant un temps défini $\Delta t_{arrêt}$. L'automate considère alors le véhicule comme étant à l'arrêt (ou du moins que le véhicule est sur le point d'effectuer une manoeuvre en côte).

Si, dans ce deuxième état, au cours du temps défini $\Delta t_{arrêt}$, la vitesse v devient supérieure à la vitesse minimum $v_{min}$, alors l'automate retourne à l'état initial 10.

Lorsque les paramètres physiques de vitesse v, de temps t, de position $\theta_{acc}$ de la pédale d'accélérateur (cette position pouvant par exemple être donnée en pourcentage d'enfoncement de la pédale), et de vitesse de rotation angulaire $\omega$ du groupe motopropulseur remplissent des conditions déterminées, l'automate estime que l'usager et le véhicule sont prêts à décoller. Il génère alors une instruction de mise en mémoire de la caractéristique de la pente $\theta_{pente}$ qui correspond à l'état dans lequel les paramètres remplissent lesdites conditions, et passe dans un troisième état 30. Le passage de l'état 20 à l'état 30 ne peut être réalisé que si cette mise en mémoire est réalisée.

Pour la génération de l'instruction de mise en mémoire, un simple mécanisme « Sample and Hold » (c'est-à-dire un mécanisme échantillonneur bloqueur) est suffisant. Nous désignerons désormais cette caractéristique enregistrée par la référence $\theta_{pente\_store}$.

Les conditions que doivent remplir lesdits paramètres sont que la vitesse v du véhicule soit inférieure à la vitesse minimum $v_{min}$ depuis un temps t supérieur au temps $\Delta t_{arrêt}$, qu'un rapport de vitesse soit engagé, que l'usager du véhicule enfonce la pédale d'accélérateur jusqu'à une position $\theta_{acc}$ inférieure à une position seuil $\theta_{acc\_seuil}$ définie, et que la vitesse de rotation angulaire $\omega$ du groupe motopropulseur soit supérieure à une vitesse de rotation angulaire minimum $\omega_{min}$.

Avantageusement, $\theta_{acc\_seuil}$ dépend de la valeur de la caractéristique de la pente enregistrée $\theta_{pente\_store}$ et de la vitesse de rotation angulaire $\omega$. Cette valeur peut être, par exemple, la valeur la plus faible fournie par la cartographie de l'accélérateur.

Dans le cas des boîtes de vitesse manuelles, une condition supplémentaire pour estimer que le véhicule et l'usager sont prêts à décoller, est de vérifier que la pédale d'embrayage soit enfoncée jusqu'à une position $\theta_{emb}$ (cette position pouvant par exemple être donnée en pourcentage d'enfoncement de la pédale) supérieure à une position $\theta_{emb\_seuil}$ définie.

Si l'une des conditions sur la vitesse v du véhicule, le temps t, l'engagement d'une vitesse, la position $\theta_{acc}$ de la pédale d'accélération, la vitesse de rotation $\omega$ du groupe motopropulseur et, le cas échéant, la position de la pédale d'embrayage $\theta_{emb}$, n'est pas remplie, l'automate reste dans l'état 20.

Si l'une des conditions sur le temps t, l'engagement d'une vitesse, la position $\theta_{acc}$ de la pédale d'accélération, la vitesse de rotation $\omega$ du groupe motopropulseur et, le cas échéant, la position de la pédale d'embrayage $\theta_{emb}$, n'est plus remplie, l'automate retourne à l'état 20.

Si la vitesse v du véhicule devient supérieure à la vitesse minimum $v_{min}$, l'automate retourne à l'état 10. Un tel cas survient lorsque, par exemple, le véhicule était à l'arrêt à un feu de signalisation tricolore, à plat. L'usager n'a alors pas besoin d'assistance pour le démarrage.

Le couple $C_{T\_Seuil}$ minimum calculé pour le décollage est alors évalué en fonction de cette information enregistrée $\theta_{pente\_store}$, et non plus en fonction de la caractéristique délivrée par le capteur de pente.

Le couple seuil $C_{T\_seuil}$ pour le décollage prend alors la valeur :

- *0* si la caractéristique de la pente enregistrée ($\theta_{pente\_store}$) est positive ou nulle et que la marche arrière est engagée, ou si la pente enregistrée ($\theta_{pente\_store}$) est négative ou nulle et que la marche avant est engagée,
- *m.g.sirl($\theta_{pente}$).r(b).$\rho_{roues}$*, si la caractéristique de la pente enregistrée ($\theta_{pente\_store}$) est strictement positive et que la marche avant est engagée, ou si la pente enregistrée ($\theta_{pente\_store}$) est strictement négative et que la marche arrière est engagée.

$$C_{T\_seuil} = \begin{cases} 0 & si \left[\left(\theta_{pente\_store} \geq 0\right) \wedge \left(RE = -1\right)\right] \vee \left[\left(\theta_{pente\_store} \leq 0\right) \wedge \left(RE = 1\right)\right] \\ r(b) \cdot \rho_{roues} \cdot m \cdot g \cdot \sin(\theta_{pente\_store}) & si \left[\left(\theta_{pente\_store} > 0\right) \wedge \left(RE = 1\right)\right] \vee \left[\left(\theta_{pente\_store} < 0\right) \wedge \left(RE = -1\right)\right] \end{cases}$$

Cette définition du couple seuil $C_{T\_seuil}$ de décollage permet donc de fixer ledit couple seuil $C_{T\_seuil}$ à zéro dans les cas où l'usager démarre dans le sens descendant de la pente.

Si le couple $C_T$ transmis à l'embrayage (estimé selon le procédé de la demande FR 2 828 450 ou calculé par le convertisseur de couple de la boîte de vitesses) est supérieur ou égal au couple $C_{T\_seuil}$ de décollage calculé en fonction de l'information sur la caractéristique de la pente enregistrée $\theta_{pente\_store}$, et si les conditions sur la vitesse, le temps t, l'engagement d'une vitesse, la position $\theta_{acc}$ de la pédale d'accélération, la vitesse de rotation $\omega$ du groupe motopropulseur et, le cas échéant, la position de la pédale d'embrayage $\theta_{emb}$, sont toujours satisfaites, l'automate entre alors dans un quatrième état 40.

Dans ce quatrième état, les conditions de décollage sont réunies depuis un temps t inférieur à un deuxième temps déterminé $\Delta t_{commande}$ (t < $\Delta t_{commande}$).

Par conditions de décollage, on entend ici les conditions pour lesquelles l'automate considère que la voiture et l'usager sont prêts à décoller, et la condition portant sur le couple transmis : $C_T \geq C_{T\_seuil}$.

A l'entrée de l'automate dans l'état 40, le calculateur 1 de contrôle commande le desserrage du Frein de Stationnement Automatique 5. On a alors t = $t_4$, où $t_4$ correspond au temps d'entrée de l'automate dans l'état 40.

Au bout du deuxième temps déterminée (c'est-à-dire lorsque t - $t_4$ > $\Delta t_{commande}$), l'automate retourne à l'état 1, et réinitialise le temps t à zéro.

A l'instant théorique de décollage, c'est-à-dire à l'instant où l'usager et le véhicule sont prêts à décoller, et où le couple transmis $C_T$ à l'embrayage est supérieur ou égal au couple de décollage $C_{T\_seuil}$, le couple fourni par le moteur doit être au moins supérieur au couple transmis par l'embrayage $C_T$.

En effet, dans le cas contraire, le véhicule risque fortement de caler. Pour éviter tout calage du véhicule, il faut :

- que l'usager accélère, ou
- que le régime moteur soit suffisant pour générer le couple demandé par l'usager.

La première condition n'est évidemment pas souhaitable.

Pour éviter l'intervention à ce niveau de l'usager, on effectue donc une cartographie de la pédale d'accélérateur.

Pour l'ensemble des pentes et régimes cartographiés, on mesure la position minimale $\theta_{acc\_seuil}$ de la pédale d'accélérateur nécessaire pour que le régime moteur soit suffisant pour générer le couple demandé par l'usager, afin de décoller sans caler.

Cette cartographie peut être déterminée au préalable par des essais sur pistes.

## Revendications

1. Procédé d'assistance aux manoeuvres en côte pour un véhicule comportant un groupe motopropulseur connecté aux roues motrices au moyen d'un embrayage et un Frein de Stationnement Automatique (5), **caractérisé en ce qu'**il comprend une étape consistant à générer une instruction de mise en mémoire de la caractéristique de la pente ($\theta_{pente}$) qui correspond à un état dans lequel on estime que l'usager et le véhicule sont prêts à décoller, à partir de conditions que doivent remplir simultanément des paramètres physiques déterminés du véhicule, à savoir :

   - la vitesse (v) du véhicule doit être inférieure à une vitesse minimum ($v_{min}$) définie, depuis un temps (t) supérieur à un temps d'arrêt ($\Delta t_{arrêt}$) défini,
   - un rapport de vitesses doit être engagée,
   - la pédale d'accélérateur doit être enfoncée jusqu'à une position ($\theta_{acc}$) inférieure à une position seuil ($\theta_{acc\_seuil}$) définie, et
   - la vitesse de rotation angulaire ($\omega$) du groupe motopropulseur doit être supérieure à une vitesse de rotation angulaire minimum ($\omega_{min}$).

2. Procédé d'assistance selon la revendication précédente, **caractérisé en ce que** les conditions sont remplies lorsqu'en outre la pédale d'embrayage est enfoncée jusqu'à une position ($\theta_{emb}$) supérieure à une certaine position seuil ($\theta_{emb\_seuil}$).

3. Procédé d'assistance selon l'une des revendications 1 ou 2, **caractérisé en ce que** le desserrage des freins n'est mis en oeuvre que si l'étape l'instruction de mise en mémoire de la caractéristique de la pente ($\theta_{pente}$) est générée.

4. Procédé selon l'une des revendications précédentes, **caractérisé en ce que** le desserrage des freins n'est mis en oeuvre que lorsque le couple transmis ($C_T$) à l'embrayage atteint un couple transmis seuil ($C_{T\_seuil}$) dit de décollage.

5. Procédé d'assistance selon la revendication précédente, **caractérisé en ce que** le couple transmis de décollage ($C_{T\_seuil}$) est estimé ou calculé en fonction de la caractéristique de la pente enregistrée ($\theta_{pente\_store}$).

6. Procédé d'assistance selon l'une des revendications 4 ou 5, **caractérisé en ce que** le couple seuil ($C_{T\_seuil}$) de décollage vaut:

   • *0* si la caractéristique de la pente enregistrée ($\theta_{pente\_store}$) est positive ou nulle et que la marche arrière est engagée, ou si la pente enregistrée ($\theta_{pente\_store}$) est négative ou nulle et que la marche avant est engagée,

• $m.g.sin(\theta_{pente}).r(b).\rho_{roues}$, si la caractéristique de la pente enregistrée ($\theta_{pente\_store}$) est strictement positive et que la marche avant est engagée, ou si la pente enregistrée ($\theta_{pente\_store}$) est strictement négative et que la marche arrière est engagée,

où

- $m$ est la masse du véhicule,
- $g$ est la gravité,
- $\theta_{pente}$ est la caractéristique de la pente,
- $r(b)$ est le rapport de boîte engagé, correspondant à la position b du levier de vitesse,
- $\rho_{roues}$ est le rayon sous charge des roues du véhicule.

7. Procédé d'assistance selon l'une des revendications précédentes, **caractérisé en ce que** la position seuil de la pédale d'accélération ($\theta_{acc\_seuil}$) est déterminée grâce à une cartographie de la pédale d'accélérateur.

8. Dispositif d'assistance aux manoeuvres en côte pour un véhicule automobile comportant un groupe motopropulseur connecté aux roues motrices au moyen d'un embrayage, le dispositif comprenant un Frein de Stationnement Automatique (5), des moyens de commande de desserrage des freins, un capteur de pente, des moyens pour déterminer la vitesse du véhicule, des moyens pour détecter et déterminer une vitesse engagée par la boîte de vitesses, des moyens pour déterminer la position de la pédale d'accélérateur, le cas échéant, des moyens pour déterminer la position ($\theta_{emb}$) de la pédale d'embrayage, et un calculateur, **caractérisé en ce que** lesdits moyens sont conçus pour mettre en oeuvre un procédé d'assistance aux manoeuvres en côte selon l'une quelconque des revendications 1 à 7.

9. Véhicule comprenant un dispositif d'assistance aux manoeuvres en côte selon la revendication précédente.

## Patentansprüche

1. Verfahren zur Unterstützung bei Fahrmanövern am Berg für ein Fahrzeug, das eine mittels einer Kupplung mit den Antriebsrädern verbundene Antriebseinheit und eine automatische Parkbremse (5) aufweist, **dadurch gekennzeichnet, dass** es einen Schritt enthält, der darin besteht, eine Anweisung zur Speicherung des Kennwerts der Steigung ($\theta_{pente}$) zu erzeugen, der einem Zustand entspricht, in dem angenommen wird, dass der Benutzer und das Fahrzeug startbereit sind, ausgehend von Bedingungen, die bestimmte physikalische Parameter des Fahrzeugs gleichzeitig erfüllen müssen, nämlich:

- die Geschwindigkeit (v) des Fahrzeugs muss niedriger sein als eine definierte Mindestgeschwindigkeit ($v_{min}$), ausgehend von einer Zeit (t) größer als eine definierte Haltezeit ($\Delta t_{arr\hat{e}t}$),
- ein Gang muss eingelegt sein,
- das Fahrpedal muss bis zu einer Stellung ($\theta_{acc}$) niedergedrückt sein, die unter einer definierten Schwellenstellung ($\theta_{acc\_seuil}$) liegt, und
- die Winkeldrehgeschwindigkeit ($\omega$) der Antriebseinheit muss höher sein als eine Mindestwinkeldrehgeschwindigkeit ($\omega_{min}$).

2. Unterstützungsverfahren nach dem vorhergehenden Anspruch, **dadurch gekennzeichnet, dass** die Bedingungen erfüllt sind, wenn außerdem das Kupplungspedal bis zu einer Stellung ($\theta_{emb}$) niedergedrückt ist, die über einer gewissen Schwellenstellung ($\theta_{emb\_seuil}$) liegt.

3. Unterstützungsverfahren nach einem der Ansprüche 1 oder 2, **dadurch gekennzeichnet, dass** das Lösen der Bremsen erst durchgeführt wird, wenn der Anweisungsschritt zur Speicherung des Kennwerts der Steigung ($\theta_{pente}$) erzeugt wird.

4. Verfahren nach einem der vorhergehenden Ansprüche, **dadurch gekennzeichnet, dass** das Lösen der Bremsen erst durchgeführt wird, wenn das an die Kupplung übertragene Drehmoment ($C_T$) ein übertragenes Startdrehmoment genanntes Schwellendrehmoment ($C_{T\_seuil}$) erreicht.

5. Unterstützungsverfahren nach dem vorhergehenden Anspruch, **dadurch gekennzeichnet, dass** das übertragene Startdrehmoment ($C_{T\_seuil}$) abhängig vom gespeicherten Kennwert der Steigung ($\theta_{pente\_store}$) geschätzt oder berechnet wird.

**6.** Unterstützungsverfahren nach einem der Ansprüche 4 oder 5, **dadurch gekennzeichnet, dass** das Start-Schwellendrehmoment ($C_{T\_seuil}$) beträgt:

• 0, wenn der gespeicherte Kennwert der Steigung ($\theta_{pente\_store}$) positiv oder null und der Rückwärtsgang eingelegt ist, oder wenn die gespeicherte Steigung ($\theta_{pente\_store}$) negativ oder null und der Vorwärtsgang eingelegt ist,
• $m.g.\sin(\theta_{pente}).r(b).\rho_{roues}$, wenn der gespeicherte Kennwert der Steigung ($\theta_{pente\_store}$) strikt positiv und der Vorwärtsgang eingelegt ist, oder wenn die gespeicherte Steigung ($\theta_{pente\_store}$) strikt negativ und der Rückwärtsgang eingelegt ist,
wobei

- m die Masse des Fahrzeugs ist,
- g die Schwerkraft ist,
- $\theta_{pente}$ der Kennwert der Steigung ist,
- r(b) der eingelegte Getriebegang ist, der der Stellung b des Gangschalthebels entspricht,
- $\rho_{roues}$ der Lastradius der Räder des Fahrzeugs ist.

**7.** Unterstützungsverfahren nach einem der vorhergehenden Ansprüche, **dadurch gekennzeichnet, dass** die Schwellenstellung des Fahrpedals ($\theta_{acc\_seuil}$) mit Hilfe eines Kennfelds des Fahrpedals bestimmt wird.

**8.** Vorrichtung zur Unterstützung bei Fahrmanövern am Berg für ein Kraftfahrzeug, das eine Antriebseinheit aufweist, die mit den Antriebsrädern mittels einer Kupplung verbunden ist, wobei die Vorrichtung eine automatische Parkbremse (5), Steuereinrichtungen zum Lösen der Bremsen, einen Steigungssensor, Einrichtungen zur Bestimmung der Geschwindigkeit des Fahrzeugs, Einrichtungen zur Erfassung und Bestimmung eines vom Getriebe eingelegten Gangs, Einrichtungen zur Bestimmung der Stellung des Fahrpedals, ggf. Einrichtungen zur Bestimmung der Stellung ($\theta_{emb}$) des Kupplungspedals und einen Rechner aufweist, **dadurch gekennzeichnet, dass** die Einrichtungen konzipiert sind, ein Unterstützungsverfahren bei Fahrmanövern am Berg nach einem der Ansprüche 1 bis 7 durchzuführen.

**9.** Fahrzeug, das eine Unterstützungsvorrichtung bei Fahrmanövern am Berg nach dem vorhergehenden Anspruch enthält.

**Claims**

**1.** Hill starter assistance method for a vehicle comprising a power unit connected to the driven wheels by means of a clutch and an automatic parking brake (5), **characterized in that** it comprises a step that consists in generating an instruction to store in memory the characteristic of the gradient ($\theta_{grad}$) which corresponds to a state in which it is estimated that the user and the vehicle are ready to pull away, on the basis of conditions that determined physical parameters of the vehicle have simultaneously to fulfil, namely:

- the speed (v) of the vehicle must have been below a defined minimum speed ($v_{min}$) for a time (t) longer than a defined stopping time ($\Delta t_{stopping}$),
- a gear ratio must be engaged,
- the accelerator must be depressed as far as a position ($\theta_{acc}$) short of a defined threshold position ($\theta_{acc\_thresh}$), and
- the angular rotational speed ($\omega$) of the power unit must be above a minimum angular rotational speed ($\omega_{min}$).

**2.** Assistance method according to the preceding claim, **characterized in that** the conditions are fulfilled when, in addition, the clutch pedal is depressed as far as a position ($\theta_{clutch}$) beyond a certain threshold position ($\theta_{clutch\_thresh}$).

**3.** Assistance method according to one of Claims 1 and 2, **characterized in that** the release of the brakes is performed only if the step of instructing the memory storage of the characteristic of the gradient ($\theta_{grad}$) is generated.

**4.** Method according to one of the preceding claims, **characterized in that** the release of the brakes is performed only when the torque transmitted ($C_T$) to the clutch reaches a threshold transmitted torque ($C_{T\_thresh}$) referred to as the pull away torque.

5. Assistance method according to the preceding claim, **characterized in that** the transmitted pull away torque ($C_{T\_thresh}$) is estimated or calculated as a function of the stored gradient characteristic ($\theta_{grad\_store}$).

6. Assistance method according to one of Claims 4 and 5, **characterized in that** the threshold pull away torque ($C_{T\_thresh}$) is equal to:

> • 0 if the stored gradient characteristic ($\theta_{grad\_store}$) is positive or zero and reverse gear is engaged or, if the stored gradient ($\theta_{grad\_store}$) is negative or zero and a forward gear is engaged,
> • $m.g.sin(\theta_{grad}).r(b).\rho_{wheels}$ if the stored gradient characteristic ($\theta_{grad\_store}$) is strictly positive and a forward gear is engaged, or if the stored gradient ($\theta_{grad\_store}$) is strictly negative and reverse gear is engaged,
> where
>
>> - $m$ is the mass of the vehicle,
>> - $g$ is gravity,
>> - $\theta_{grad}$ is the characteristic of the gradient,
>> - $r(b)$ is the gearbox ratio engaged, corresponding to the positon b of the gear level,
>> - $\rho_{wheels}$ is the laden radius of the wheels of the vehicle.

7. Assistance method according to one of the preceding claims, **characterized in that** the threshold position of the accelerator pedal ($\theta_{acc\_thresh}$) is determined using a map of the accelerator pedal.

8. Hill start assistance device for a motor vehicle comprising a power unit connected to the driven wheels by means of a clutch, the device comprising an automatic parking brake (5), brake release control means, a gradient sensor, means for determining the speed of the vehicle, means for detecting and determining a gear ratio engaged by the gearbox, means for determining the position of the accelerator pedal, where appropriate, means for determining the position ($\theta_{cluch}$)of the clutch pedal, and a processor, **characterized in that** the said means are designed to carry out a hill start assistance method according to any one of Claims 1 to 7.

9. Vehicle comprising a hill start assistance device according to the preceding claim.

**Figure 1**

**Figure 2**

$|v| < v_{min}$ ET
un rapport engagé
ET
$\theta_{acc} < \theta_{acc\_seuil}$ ET
$\omega > \omega_{min}$
$\theta_{pente\_store} = \theta_{pente}$

$|v| < v_{min}$
pendant $\Delta t_{arrêt}$

**10**   **20**   **30**

$|v| > v_{min}$

$|RE| < 1$        OU
$\theta_{acc} > \theta_{acc\_seuil}$ OU
$\omega < \omega_{min}$

$|v| > v_{min}$

desserrage des freins;
instant d'entrée dans
l'étape 4 : $t = t_4$

$t - t_4 > \Delta t_{commande}$

**40**

## Figure 3

$\theta_{acc}$

$\omega_m$

$\theta_{pente\ store}$

cartographie

$\theta_{acc\ seuil}$

$\geq$

$C_{T\ seuil}$

$C_T$

$\geq$

$\geq$

$\omega_{m\ seuil}$

&

desserrage

Engagement
d'un rapport

abs

$== 1$

Un raport est engagé

## Figure 4

## RÉFÉRENCES CITÉES DANS LA DESCRIPTION

**Documents brevets cités dans la description**

- GB 2376990 A
- FR 2858032
- FR 2828450